(19) Europäisches Patentamt
European Patent Office
Office européen des brevets

(11) **EP 3 489 828 B1**

(12) **EUROPEAN PATENT SPECIFICATION**

(45) Date of publication and mention of the grant of the patent:
**21.04.2021 Bulletin 2021/16**

(51) Int Cl.:
**G06F 11/07** *(2006.01)*     *G06F 11/30* *(2006.01)*
**G06F 11/34** *(2006.01)*

(21) Application number: **18163184.7**

(22) Date of filing: **21.03.2018**

(54) **METHOD AND SYSTEM FOR RESOLVING ANOMALY EVENTS OCCURRING IN A VIRTUAL ENVIRONMENT IN REAL-TIME**

VERFAHREN UND SYSTEM ZUR AUFLÖSUNG VON ANOMALIEEREIGNISSEN IN EINER VIRTUELLEN UMGEBUNG IN ECHTZEIT

PROCÉDÉ ET SYSTÈME POUR RÉSOUDRE DES ÉVÉNEMENTS D'ANOMALIES SURVENANT DANS UN ENVIRONNEMENT VIRTUEL EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2017 IN 201741042229**

(43) Date of publication of application:
**29.05.2019 Bulletin 2019/22**

(73) Proprietor: **Wipro Limited**
**560 035 Karnataka (IN)**

(72) Inventor: **KAKARAPARTHI, Narasimha Sekhar**
**500072 Hyderabad (IN)**

(74) Representative: **Finnegan Europe LLP**
**1 London Bridge**
**London SE1 9BG (GB)**

(56) References cited:
**WO-A1-2013/097176**    **WO-A1-2016/191639**
**US-A1- 2014 068 348**

## Description

### Technical Field

The present subject matter relates generally to a virtual environment, and more particularly, but not exclusively, to a method and a system for resolving one or more anomaly events occurring in the virtual environment in real-time.

### Background

Generally, a virtual environment facilitates users to connect to virtual desktops that are provisioned using servers located in remote data centres. The virtual environment is a complex system architecture that involves multiple data communication layers. User experience in a scenario including the virtual environment is crucial. The user experience depends on multiple factors such as connectivity, bandwidth, congestion, traffic, resource overuse and the like. These factors may give rise to anomaly events in the virtual environment such as adversely impacted desktop responsiveness, poor session response time, poor graphics quality and responsiveness, connectivity issues, ill-optimized device configuration and the like. The virtual desktops generally are shared with a group of users in the virtual environment and in many cases, multiple instances of a single application may be provided to multiple users. Therefore, maintaining a good user experience and guiding the user through remedial actions to overcome the anomaly events in such a shared environment may be challenging. As a result of which, the end users may raise numerous service request tickets for numerous issues and the service request tickets may pile up quickly based on virtual desktop user count, thus making it unmanageable over time. Also, a substantial amount of time and effort of a helpdesk team may be utilized for implementing the same repetitive remedial measures for the same/similar repetitive anomalies occurring for multiple users in the virtual environment. These scenarios in the virtual environment trigger a need for virtual assistance tools that could measure the user experience and provide real-time solutions to improve the user experience. However, traditional virtual assistance tools possess limited capabilities in measuring the user experience of individual users under study.

Currently, there are some inbuilt tools such as task manager, performance monitor and the like that are available as an integral part of an operating system to report extreme conditions of a desktop. However, these inbuilt tools may be time intensive and not appropriate for the users operating in the virtual environment. Also, these inbuilt tools are not virtual environment related solutions that understand a remote desktop environment to avoid inconvenience faced by the users. The existing techniques provide a method for establishing Quality of Experience (QoE) measurements and metrics for different types of actual user activities over Internet Protocol (IP) networks. This technique further considers realistic user behaviour by defining a set of behaviour profiles and methods for testing edge devices by embedding meta-commands in normal network packets. However, this technique may not be suitable for the virtual environment and may require user interference for most part of the solution, thereby leading to ticket pile up scenarios until the user is provided with personal attention to resolve the issue. Few other existing techniques provide a method for dynamically re-allocating the user to an alternative virtual desktop pool. In this technique, a virtual application may monitor relevant parameters related to resource utilization and the user experience. Based on the monitored parameters, this technique may involve re-allocating or migrating the user to an alternative virtual desktop pool to provide a better user experience. Any further changes observed in activities of the user may reflect in further re-allocation of the user to another alternative virtual desktop pool to ensure good user experience. However, this technique does not resolve the issues in the virtual environment, but instead switches the user between multiple virtual desktops to provide good user experience.

WO 2016/191639 discloses an automatic anomaly detection and resolution system.

US 2014/068348 discloses a system and method for intelligent troubleshooting of in-service customer experience issues in communication networks.

WO 2013/097176 discloses a user experience index monitoring method and monitoring virtual machine.

### Summary

One or more shortcomings of the prior art may be overcome, and additional advantages may be provided through the present disclosure. Additional features and advantages may be realized through the techniques of the present disclosure. Other embodiments and aspects of the disclosure are described in detail herein and are considered a part of the claimed disclosure.

Disclosed herein is a method of resolving one or more anomaly events occurring in a virtual environment in real-time according to claim 1.

Further, the present disclosure includes a virtual assisting system for resolving one or more anomaly events occurring in a virtual environment in real time according to claim 7.

Furthermore, the present disclosure includes a non-transitory computer readable medium including instructions stored thereon that when processed by at least one processor causes a virtual assisting system to perform operations according to claim 8.

Finally, disclosed herein is a computer program product according to claim 9.

The foregoing summary is illustrative only and is not intended to be in any way limiting. In addition to the illustrative aspects, embodiments, and features described above, further aspects, embodiments, and features will become apparent by reference to the drawings and the following detailed description.

## Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

**FIG.1** shows an exemplary architecture for resolving one or more anomaly events occurring in a virtual environment in real-time in accordance with some embodiments of the present disclosure;

**FIG.2** shows a detailed block diagram of a virtual assisting system for resolving one or more anomaly events occurring in a virtual environment in real-time in accordance with some embodiments of the present disclosure;

**FIG.3** shows a flowchart illustrating a method of resolving one or more anomaly events occurring in a virtual environment in real-time in accordance with some embodiments of the present disclosure; and

**FIG.4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The terms "comprises", "comprising", "includes" or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

Disclosed herein are a method and a system for resolving one or more anomaly events occurring in a virtual environment in real-time using a virtual assisting system. The present disclosure dynamically captures and interprets real-time anomaly events that affect user experience in the virtual environment and performs self-healing/auto-implementation of one or more actions to resolve the anomaly events dynamically. The term "anomaly event" as used herein preferably refers to a condition in the virtual environment that adversely affects the user experience for a user of the virtual environment. The condition may reside in the hardware, software and/or network infrastructure that implements or supports the virtual environment. The term "virtual assisting system" as used herein preferably refers to hardware and/or software that is configured to perform the methods disclosed herein, in order to automatically resolve an anomaly event in a virtual environment. The virtual assisting system may comprise a server. Although, in the present disclosure, the method of resolving one or more anomaly events occurring in a virtual environment in real-time is described in conjunction with the server, the method can also be implemented in various computing systems/devices, other than the server. The virtual assisting system may initially identify one or more trigger points in relation to the one or more anomaly events that affect user experience in the virtual environment by continuously monitoring one or more predefined trigger parameters. The one or more trigger points may be potential areas that impact user experience in the virtual environment. As an example, based on the continuous monitoring, the virtual assisting system may identify deviation of a predefined trigger parameter "Network Latency" from its original value. As a result of the deviation, an anomaly event such as "Excessive delay in receiving data" may occur in the virtual environment. Therefore, the virtual assisting system may identify the trigger point corresponding to the predefined trigger parameter "Network Latency" as "Network". As an example, the one or more other predefined trigger parameters associated with the trigger point "Network" may be "bandwidth", "congestion" and the like. Upon identifying the one or more trigger points, the virtual assisting system may retrieve each of one or more resolution policies associated with each of the one or more trigger points from a policy database associated with the virtual assisting system. Each of the one or more resolution policies include at least one of one or more predefined trigger threshold values, the one or more predefined trigger parameters associated with each of the one or more trigger points, one or more metrics and one or more weights associated with each of the one or more predefined trigger parameters, user experience threshold value and one or more actions corresponding to the user experience threshold value.

Based on the one or more metrics and one or more weights recorded for each of the one or more predefined trigger parameters in each of the one or more resolution policies, the virtual assisting system may compute a User Experience Index (UXI) value for each of the one or more trigger points. Based on the UXI value, the virtual assisting system may select the one or more actions corresponding to each of the one or more trigger points from each of the one or more resolution policies to resolve the one or more anomaly events occurring in the virtual environment. Upon identifying the one or more actions, the virtual assisting system may implement the one or more actions in the virtual environment, thereby resolving the one or more anomaly events. In a scenario where the one or more actions are not available due to occurrence of a new anomaly event, the virtual assisting system may immediately generate one or more new resolution policies to resolve the new anomaly event. The one or more new resolution policies thus generated may be first added to the policy database and then may be distributed to each of one or more remote servers associated with the virtual assisting system for maintaining a local copy of the one or more new resolution policies. Further, the virtual assisting system may include the capability to update, add, delete or modify the one or more resolution policies as per requirement based on self-learning in the virtual environment. The present disclosure provides an advantage wherein, repetitive anomalies commonly occurring in the virtual environment for most of the users are automatically identified based on continuous monitoring and addressed automatically without the need for the users to raise service tickets. Further, the present disclosure provides a feature wherein the users may be provided with necessary notifications in a way customized by the user, when the actions require interference of the users for resolving the anomaly events. The customization settings may be provided to the user with respect to audio notifications and visual notifications.

A description of an embodiment with several components in communication with each other does not imply that all such components are required. On the contrary a variety of optional components are described to illustrate the wide variety of possible embodiments of the invention.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

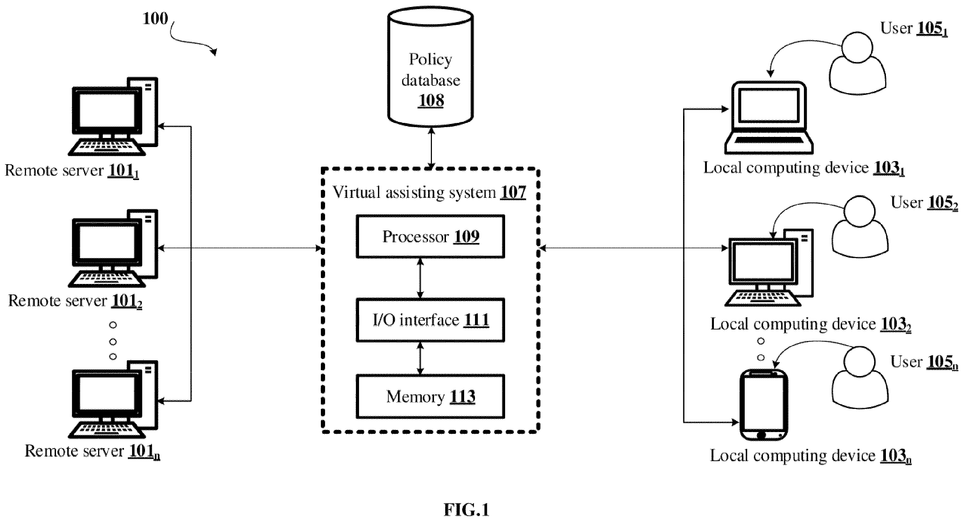

FIG.1 shows an exemplary architecture for resolving one or more anomaly events occurring in a virtual environment in real-time in accordance with some embodiments of the present disclosure.

The architecture 100 includes a remote server $101_1$ to remote server $101_n$ (collectively referred as one or more remote servers 101), a local computing device $103_1$ to local computing device $103_n$ (collectively referred as one or more local computing devices 103), user $105_1$ to user $105_n$ (collectively referred as users 105), a virtual assisting system 107 and a policy database 108. As an example, the one or more remote servers 101 may be computing devices such as laptops, desktops and the like possessing high processing capabilities. As an example, the one or more local computing devices 103 may be a laptop, a desktop, a mobile, a tablet and the like that are capable of establishing a virtual environment with the one or more remote servers 101. The one or more remote servers 101 may communicate with the one or more local computing devices 103 associated with users 105 via a communication network (not shown in the FIG.1). In some embodiments, the communication network may be at least one of a wired communication network or a wireless communication network. Further, the policy database 108 may be externally associated with the virtual assisting system 107. In some embodiments, the policy database 108 may be configured within the virtual assisting system 107.

In the virtual environment, the one or more remote servers 101 may run applications and commutations, while the users 105 view and operate the running of the applications and the commutations using the one or more local computing devices 103 with an illusion that they are actually running on the one or more local computing devices 103 associated with the users 105. The one or more remote servers 101 may be associated with the virtual assisting system 107 for resolving one or more anomaly events occurring in the virtual environment.

The virtual assisting system 107 includes a processor 109, an Input/Output (I/O) interface 111 and a memory 113. The processor 109 may continuously monitor one or more predefined trigger parameters causing one or more anomaly events in the virtual environment. Each of the one or more predefined trigger parameters may belong to one or more trigger points. In some embodiments, the one or more trigger points may be potential areas that impact user experience in the virtual environment. As an example, based on the continuous monitoring, the processor **109** may identify deviation of a predefined trigger parameter "Network Latency" from its original value. As a result of the deviation, an anomaly event such as "Excessive delay in receiving data" may occur in the virtual environment. Therefore, the processor **109** may identify the trigger point corresponding to the predefined trigger parameter "Network Latency" as "Network". As an example, the one or more predefined trigger parameters related to the trigger point "Network" may further include "bandwidth", "congestion" and the like. Similarly, if the processor **109** identifies a deviation with respect to one or more predefined parameters such as "response time", "waiting time", "turnaround time" and the like, then the trigger point may be identified as "System performance" based on the anomaly events occurring due to the deviation in the one or more predefined trigger parameters. Further, the processor **109** may continuously compare values associated with each of the one or more predefined trigger parameters with predefined trigger threshold values. In some embodiments, the predefined trigger threshold values correspond to the ideal values of each of the one or more predefined trigger parameters, which when deviated may cause occurrence of the one or more anomaly events. Based on the comparison, the processor **109** may identify the one or more trigger points when a deviation is detected in the values associated with each of the one or more predefined trigger parameters.

Upon identifying the one or more trigger points, the processor **109** retrieves, through the I/O Interface **111,** each of one or more resolution policies associated with each of the one or more trigger points from the policy database **108.** Each of the one or more resolution policies may indicate a solution to resolve the one or more anomaly events based on certain conditions. In some embodiments, the one or more resolution policies may include, but not limited to, the one or more predefined trigger threshold values, the one or more predefined trigger parameters associated with each of the one or more trigger points, one or more metrics and one or more weights associated with each of the one or more predefined trigger parameters, user experience threshold value and one or more actions corresponding to the user experience threshold value.

The processor **109** may retrieve the one or more metrics and the one or more weights associated with each of the one or more predefined trigger parameters from each of the one or more resolution policies, based on the values associated with each of the one or more predefined trigger parameters. As an example, if the "waiting time" varies between 1-3 seconds, then the metric associated with the predefined trigger parameter "waiting time" may be "1". As an example, the weight associated with the predefined trigger parameter "waiting time" may be "3". In some embodiments, the weight associated with the one or more predefined trigger parameters may be dynamic in nature. The processor **109** may compute a User Experience Index (UXI) value for each of the one or more trigger points by correlating each of the one or more metrics and each of the one or more weights retrieved from each of the one or more resolution policies. The UXI value of each of the one or more trigger points indicates respective impact of each of the one or more trigger points identified in the virtual environment, on the user experience. The processor **109** may compare the UXI value with the user experience threshold value provided in each of the one or more resolution policies. In some embodiments, the user experience threshold value corresponds to an ideal value that indicates level of the respective impact of each of the one or more trigger points on the user experience. Based on the comparison, the processor **109** may select the one or more actions from each of the one or more resolution policies to resolve the one or more anomaly events caused due to occurrence of the one or more trigger points. Upon identifying the one or more actions, the processor **109** may implement the one or more actions in the virtual environment to resolve the one or more anomaly events. In some embodiments, the one or more actions may be at least one of a self-implementing type or a user intervention type. The self-implementing type of the one or more actions may include resolving the one or more anomaly events by the processor **109** without intervention of the user **105.** The user intervention type of the one or more actions may include resolving the one or more anomaly events with intervention of the user **105.** The processor **109** may achieve the user intervention by sending a notification to the user **105.** In some embodiments, the notification may be at least one of an audio notification or a visual notification. As an example, the audio notification may be an alarm, voice instructions and the like. As an example, the visual notifications may be pop-ups on screen of the one or more local computing devices **103** associated with the users **105** and the like.

In a scenario where the one or more actions are not available due to occurrence of new anomaly events, the processor **109** may immediately generate one or more new resolution policies to resolve the new anomaly events. Further, the processor **109** may add the new anomaly events and the corresponding one or more new resolution policies to the policy database **108.** Furthermore, the processor **109** may distribute the one or more new resolution policies to each of the one or more remote servers **101** associated with the virtual assisting system **107** for maintaining a local copy of the one or more new resolution policies in the memory **113.** In some embodiments, the processor **109** may update, add, delete or modify the one or more resolution policies as per requirement based on self-learning in the virtual environment.

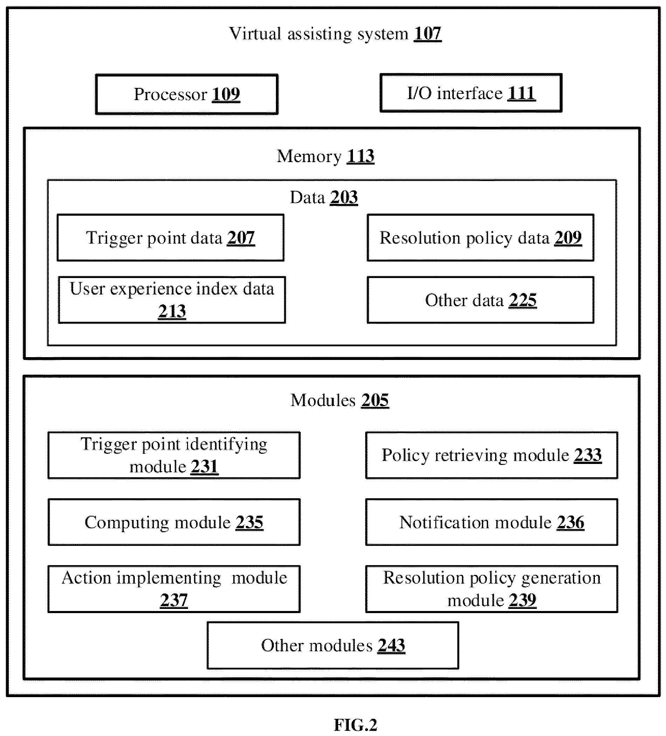

**FIG.2** shows a detailed block diagram of a virtual assistance system for resolving one or more anomaly events occurring in a virtual environment in real-time in accordance with some embodiments of the present disclosure.

In some implementations, the virtual assisting system **107** may include data **203** and modules **205.** As an example, the data **203** is stored in the memory **113** configured in the virtual assisting system **107** as shown in the **FIG.2.** In one embodiment, the data **203** may include a trigger point data **207,** a resolution policy data **209,** a User Experience Index (UXI) data **213** and other data **225.** In the illustrated **FIG.2,** modules **205** are described herein in detail.

In some embodiments, the data **203** may be stored in the memory **113** in form of various data structures. Additionally, the data **203** can be organized using data models, such as relational or hierarchical data models. The other data **225** may store data, including temporary data and temporary files, generated by the modules **205** for performing the various functions of the virtual assisting system **107.**

In some embodiments, the data **203** stored in the memory **113** may be processed by the modules **205** of the virtual assisting system **107.** The modules **205** may be stored within the memory **113.** In an example, the modules **205** communicatively coupled to the processor **109** configured in the virtual assisting system **107,** may also be present outside the memory **113** as shown in **FIG.2** and implemented as hardware. As used herein, the term modules refer to an application specific integrated circuit (ASIC), an electronic circuit, a processor (shared, dedicated, or group) and memory that execute one or more software or firmware programs, a combinational logic circuit, and/or other suitable components that provide the described functionality.

In some embodiments, the modules **205** may include, for example, a trigger point identifying module **231,** a policy retrieving module **233,** a computing module **235,** a notification module **236,** an action implementing module **237,** a resolution policy generation module **239** and other modules **243.** The other modules **243** may be used to perform various miscellaneous functionalities of the virtual assisting system **107.** It will be appreciated that such aforementioned modules **205** may be represented as a single module or a combination of different modules.

In some embodiments, the trigger point identifying module **231** may identify one or more trigger points in relation to one or more anomaly events affecting user experience in the virtual environment. In some embodiments, the one or more anomaly events may occur due to deviation of one or more predefined trigger parameters associated with the one or more trigger points, from their original values. As an example, when the predefined trigger parameter "Network Latency" is identified to be deviating from the original value, the anomaly event occurring due to the deviation may be "Excessive delay in receiving data". In some embodiments, the one or more trigger points may be potential areas that impact user experience in the virtual environment. As an example, the one or more trigger points may be capacity related conditions, performance errors, security and the like. The one or more trigger points may be stored as the trigger point data **207.** In some embodiments, the one or more trigger points may originate from system resources present in the virtual environment. The one or more trigger points may be classified into, but not limited to, compute type such as those originating from virtual Central Processing Unit (CPUs) and the like, storage type such as those originating from storage drives or Logical Unit Number (LUNs) and the like, network type such as those originating from virtual Network Interface Card (NICs) and the like, and miscellaneous type such as those originating from sources like applications, external devices mapped to local computing devices **103,** operating system managing the virtual environment and the like. Few exemplary trigger points are as shown in the below **Table 1.**

Table 1

| SL.NO | TRIGGER POINT | EXAMPLE |
|---|---|---|
| 1 | Capacity related conditions | - Low free disk storage space |
| 2 | Performance specific errors | - Slow response<br>- High waiting time<br>- Quota exceeding |
| 3 | Application/Service events | - Application crashes |
| 4 | Operating System events | - Boot start-up errors |
| 5 | Service Level Agreement (SLA) mismatch errors | - Error in logon time<br>- Application launch time,<br>- Desktop response time and the like mentioned in the SLA |
| 6 | Security | - Multiple authentication failures<br>- Desktop delivery port blocking<br>- Attempt to manage remotely without proper certificate.<br>- Firewall/GPO violations |

(continued)

| SL.NO | TRIGGER POINT | EXAMPLE |
|---|---|---|
| 7 | Failed interactions with desktop delivery system | - Connections with virtual desktops |
| 8 | Network | - Low network bandwidth<br>- Slow network connection<br>- High packet loss |
| 9 | Virtual Desktop delivery protocol related issues | - Higher Independent Computing Architecture (ICA)/ PC-over-IP (PCoIP)/ Remote Graphics Software (RGS) latency |
| 10 | Failed interactions with external systems | - Shared storage paths<br>- Enterprise network shares<br>- Backend services<br>- Cloud storage |

In some embodiments, the trigger point identifying module 231 may continuously monitor one or more predefined trigger parameters causing the one or more anomaly events in the virtual environment. Each of the one or more predefined trigger parameters may belong to the one more trigger points. As an example, if the trigger point is "Network", then the one or more predefined trigger parameters related to the trigger point "Network" may be "network latency", "bandwidth", "congestion" and the like. Further, the trigger point identifying module 231 may continuously compare values associated with each of the one or more predefined trigger parameters with predefined trigger threshold values. In some embodiments, the predefined trigger threshold values correspond to the ideal values of each of the one or more predefined trigger parameters, which when deviated may cause occurrence of the one or more anomaly events. Based on the comparison, the trigger point identifying module **231** may identify the one or more trigger points when a deviation is detected in the values associated with each of the one or more predefined trigger parameters.

In some embodiments, the policy retrieving module **233** may retrieve each of the one or more resolution policies associated with each of the one or more trigger points from a policy database **108** associated with the virtual assisting system **107.** The one or more resolution policies may be stored as the resolution policy data **209.** Each of the one or more resolution policies may indicate a solution to resolve the one or more anomaly events based on certain conditions. In some embodiments, the one or more resolution policies may include, but not limited to, the one or more predefined trigger threshold values, the one or more predefined trigger parameters associated with each of the one or more trigger points, one or more metrics and one or more weights associated with each of the one or more predefined trigger parameters, user experience threshold value and one or more actions corresponding to the user experience threshold value.

In some embodiments, the computing module **235** may compute a User Experience Index (UXI) value for each of the one or more trigger points. The computing module **235** may retrieve each of the one or more metrics and each of the one or more weights associated with each of the one or more predefined trigger parameters from each of the one or more resolution policies, based on the values associated with each of the one or more predefined trigger parameters. The computing module **235** may compute the UXI value of each of the one or more trigger points by correlating each of the one or more metrics and each of the one or more weights retrieved from each of the one or more resolution policies using the below **Equation 1.**

$$UXI = \sum_{i=0}^{n}[(Metric)i * (Weight)i] \qquad \textbf{Equation 1}$$

In the above Equation 1,

"i" indicates the current iteration;

"n" indicates the total number of iterations used for computing the UXI value.

In some embodiments, the UXI value of each of the one or more trigger points may be stored as the UXI data **213.**

The action implementing module **237** may implement the one or more actions corresponding to the one or more trigger points in real-time. The action implementing module **237** may compare the UXI value with the user experience threshold value provided in each of the one or more resolution policies. In some embodiments, the user experience threshold value corresponds to an ideal value that indicates level of the respective impact of each of the one or more trigger points on the user experience. Based on the comparison, the action implementing module **237** may select the one or more actions from each of the one or more resolution policies to resolve the one or more anomaly events caused due to occurrence of the one or more trigger points. As an example, the one or more actions may include, but not limited to, modifying configurations such as increasing resource allocation, cleaning up and the like, improving uptime such as starting service, rebooting and the like, notifying representatives such as sending emails, raising service tickets and the like and customized actions in accordance with settings of the uses **105**. In some embodiments, the one or more actions may be at least one of a self-implementing type or a user intervention type. The self-implementing type of the one or more actions may include resolving the one or more anomaly events by the action implementing module **237** without intervention of the user **105**. The user intervention type of the one or more actions may include resolving the one or more anomaly events with intervention of the user **105.**

In some embodiments, the notification module **236** may send a notification to the user **105** upon detecting the one or more actions to be the user intervention type. In some embodiments, the notification may be at least one of an audio notification or a visual notification. As an example, the audio notification may be an alarm, voice instructions and the like. As an example, the visual notifications may be pop-up messages on screen of one or more local computing devices **103** associated with the users **105** and the like. In some embodiments, the notification module **236** may allow the pop-up messages to appear on screens of the one or more local computing devices **103** for a short period of time and disappear automatically. In some embodiments, duration for which the pop-up messages should be displayed may be preconfigured to a value which is sufficient for the users **105** to notice the pop-up messages. Further, the users **105** may be provided with a provision such as customization settings on the one or more local computing devices **103** to customize manner in which the users **105** wish to receive the notification. As an example, the customizations settings may include, but are not limited to, muting/unmuting speech messages, selecting gender/language/sound levels of voice required for audio notifications, stopping/restarting visual feedbacks and the like. Further, the one or more local computing devices **103** may be provided with local Bots to provide appropriate feedback to the users **105** when required in the virtual environment.

Further, upon identifying the one or more actions, the action implementing module **237** may implement the one or more actions in the virtual environment based on type of the one or more actions, to resolve the one or more anomaly events.

In some embodiments, the resolution policy generation module **239** may generate one or more new resolution policies. In a scenario where the one or more actions may not be available due to occurrence of new anomaly events, the resolution policy generation module **239** may analyse the one or more new anomaly events in real-time. Based on the analysis, the resolution policy generation module **239** may immediately generate one or more new resolution policies to resolve the new anomaly events. Upon generating the one or more new resolution policies, the resolution policy generation module **239** may add the new anomaly events and the corresponding one or more new resolution policies to the policy database **108**. Furthermore, the resolution policy generation module **239** may distribute the one or more new resolution policies to each of the one or more remote servers **101** associated with the virtual assisting system **107** for maintaining a local copy of the one or more new resolution policies in the memory **113**. Further, the resolution policy generation module **239** may perform additional functionalities such as updating, adding, deleting or modifying the one or more resolution policies as per requirement based on self-learning in the virtual environment.

Henceforth, the process for resolving one or more anomaly events occurring in a virtual environment in real-time is explained with the help of one or more examples for better understanding of the present disclosure. However, the one or more examples should not be considered as limitation of the present disclosure.

Consider an exemplary scenario where 3 users **D1, D2** and **D3** are in the virtual environment with one remote server **R1** associated with the virtual assisting system **107**. Consider that the 3 users **D1**, **D2** and **D3** are using the resources of the remote server **R1** in the virtual environment. This scenario is illustrated by using only a single remote server **R1**. However, any number of remote servers **R1** to **Rn** may be associated with the virtual assisting system **107** in the virtual environment. The virtual assisting system **107** is continuously monitoring the one or more predefined trigger parameters in the virtual environment. Based on the continuous monitoring consider that the virtual assisting system **107** identified a trigger point "Network" which corresponds to the predefined trigger parameter "Network latency" for user **D1**. The virtual assisting system **107** may retrieve a resolution policy from the policy database **108** that is relevant to the identified trigger point and the predefined trigger parameter. Based on the resolution policy, the predefined trigger parameter "Network latency" is associated with a metric and a weight. The metrics associated with the predefined trigger parameter "Network latency" in the resolution policy may be as indicated in the below **Table 2**.

**Table 2**

| Current value of Network latency | Metric according to the resolution policy | Weight according to the resolution policy |
|---|---|---|
| 0 - 20ms | 1 | 4 |
| 21ms - 100ms | 0.8 | 4 |
| 100ms - 200ms | 0.5 | 4 |
| Above 200ms | 0.3 | 4 |

Consider that for a cycle of 5 minutes, the current value of the predefined trigger parameter "Network latency" varies between 20ms and 60ms. Therefore, based on the above **Table 2,** the metrics applicable for the predefined trigger parameter "Network latency" are 1 and 0.8. Further, according to the above **Table 2,** the weight associated with the predefined trigger parameter "Network latency" is 4. Therefore, the virtual assisting system **107** may compute the
UXI value for the trigger point "Network" with respect to the predefined trigger parameter "Network latency" using the **Equation 1.**

$$\text{UXI} = \sum_{i=0}^{n}[(\text{Metric})i * (\text{Weight})i] \qquad \textbf{Equation 1}$$

By substituting the above values of the metrics and weights associated with the predefined trigger parameter "Network latency" in the above **Equation 1,**

$$\text{UXI} = [(1*4) + (0.8*4)]/2 = 3.6$$

Similarly, the UXI value may be computed for each of the one or more trigger points to understand the respective impact that each of the one or more trigger points may have on the user experience in the virtual environment. According to the UXI value, a corresponding action is provided in the resolution policy which means that based on the impact of the trigger point on the user experience, the necessary action is provided in the resolution policy. As an example, the necessary action may indicate "Close unnecessary bandwidth intensive applications running in the background". Since, the necessary action is self-implementing type, the virtual assisting system **107** may implement the action corresponding to the UXI value automatically without the intervention of the user **D1**.
Consider a scenario where the predefined trigger parameter "Network latency" corresponding to a certain UXI value does not have any action defined in the resolution policy. In such scenario, the virtual assisting system **107** may generate a new resolution policy comprising the necessary action for the predefined trigger parameter "Network latency" corresponding to the certain UXI value. Further, the virtual assisting system **107** may store the new resolution policy in the policy database **108** and may update the one or more resolution policies based on the new resolution policy. Further, the virtual assisting system **107** may distribute the new resolution policy to remote servers **R1** to **Rn** that are associated with the virtual assisting system **107,** thereby storing a local copy of the one or more new resolution policies.

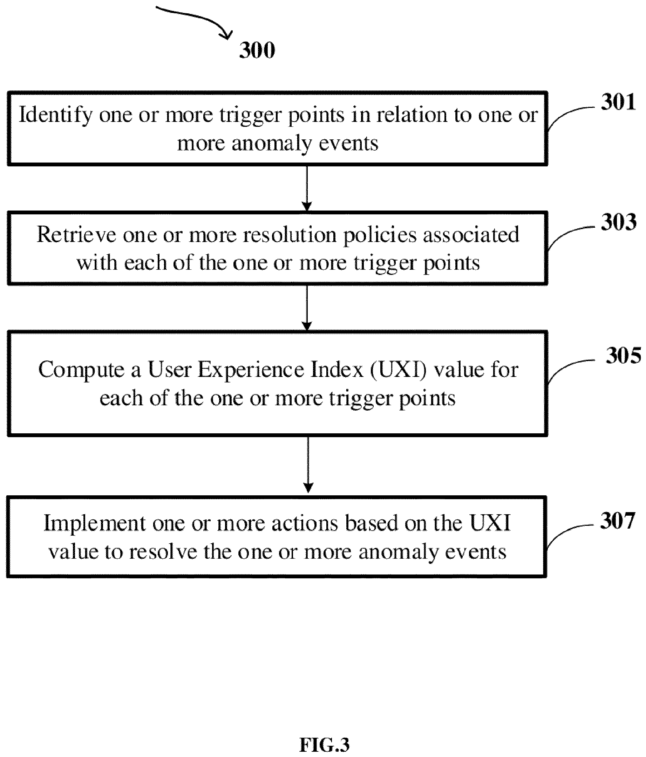

**FIG.3** shows a flowchart illustrating a method of resolving one or more anomaly events occurring in a virtual environment in real-time in accordance with some embodiments of the present disclosure.
As illustrated in **FIG.3,** the method **300** includes one or more blocks illustrating a method of resolving one or more anomaly events occurring in a virtual environment in real-time. The method **300** may be described in the general context of computer executable instructions. Generally, computer executable instructions can include routines, programs, objects, components, data structures, procedures, modules, and functions, which perform functions or implement abstract data types.
The order in which the method **300** is described is not intended to be construed as a limitation, and any number of the described method blocks can be combined in any order to implement the method **300.** Additionally, individual blocks may be deleted from the methods without departing from the scope of the subject matter described herein. Furthermore, the method **300** can be implemented in any suitable hardware, software, firmware, or combination thereof.
At **block 301,** the method **300** may include identifying, by a processor **109** of the virtual assisting system **107,** one or more trigger points in relation to the one or more anomaly events affecting user experience in the virtual environment. In some embodiments, the one or more trigger points may be potential areas that impact user experience in the virtual environment.
At **block 303,** the method **300** may include retrieving, by the processor **109,** each of the one or more resolution policies associated with each of the one or more trigger points from a policy database **108** associated with the virtual assisting system **107.** Each of the one or more resolution policies present may indicate a solution to resolve the one or more anomaly events based on certain conditions.

At **block 305,** the method **300** may include, computing, by the processor **109,** a User Experience Index (UXI) value for each of the one or more trigger points by correlating each of one or more metrics and each of one or more weights associated with each of the one or more trigger points recorded in each of the one or more resolution policies. The UXI value indicates respective impact of each of the one or more trigger points identified in the virtual environment, on the user experience.

At **block 307,** the method **300** may include, implementing, by the processor **109,** one or more actions corresponding to the one or more trigger points indicated in each of the one or more resolution policies based on the UXI value to resolve the one or more anomaly events occurring in the virtual environment. In some embodiments, the processor **109** may compare the UXI value with the user experience threshold value provided in the one or more resolution policies. In some embodiments, the user experience threshold value corresponds to an ideal value that indicates level of the respective impact of each of the one or more trigger points on the user experience. Based on the comparison, the processor **109** may select the one or more actions from each of the one or more resolution policies to resolve the one or more anomaly events caused due to occurrence of the one or more trigger points. In some embodiments, the one or more actions may be at least one of a self-implementing type or a user intervention type. The self-implementing type of the one or more actions may include resolving the one or more anomaly events by the processor **109** without intervention of the user **105.** The user intervention type of the one or more actions may include resolving the one or more anomaly events with intervention of the user **105.** The processor **109** may achieve the user intervention by sending a notification to the user **105.** In some embodiments, the notification may be at least one of an audio notification or a visual notification.

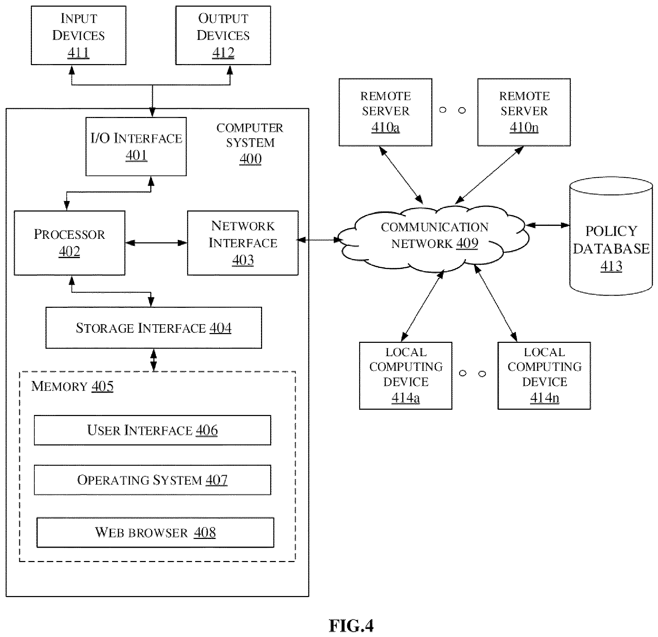

**FIG.4** is a block diagram of an exemplary computer system for implementing embodiments consistent with the present disclosure.

In some embodiments, **FIG.4** illustrates a block diagram of an exemplary computer system **400** for implementing embodiments consistent with the present invention. In some embodiments, the computer system **400** can be virtual assisting system **107** that is used for resolving one or more anomaly events occurring in a virtual environment in real-time. The computer system **400** may include a central processing unit ("CPU" or "processor") **402.** The processor **402** may include at least one data processor for executing program components for executing user or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with input devices **411** and output devices **412** via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** computer system **400** may communicate with input devices **411** and output devices **412.**

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the computer system **400** may communicate with one or more remote servers **410** (**410$_a$** up to **410$_n$**), one or more local computing devices **414** (**414$_a$** up to **414$_n$**) of users **105** and a policy database **413.** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more remote servers **410** may include, but not limited to, a laptop and a desktop. The one or more local computing devices **414** may include, but not limited to, a laptop, a desktop, a tablet and a mobile. In some embodiments, the processor **402** may be disposed in communication with a memory **405** (e.g., RAM, ROM, etc. not shown in **FIG.4)** via a storage interface **404.** The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 405 may store a collection of program or database components, including, without limitation, a user interface 406, an operating system 407, a web browser 408 etc. In some embodiments, the computer system 400 may store user/application data, such as the data, variables, records, etc. as described in this invention. Such databases may be implemented as fault-tolerant, relational, scalable, secure databases such as Oracle or Sybase.

The operating system 407 may facilitate resource management and operation of the computer system 400. Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vista/7/8, etc.), Apple iOS, Google Android, Blackberry Operating System (OS), or the like. The User interface 406 may facilitate display, execution, interaction, manipulation, or operation of program components through textual or graphical facilities. For example, user interfaces may provide computer interaction interface elements on a display system operatively connected to the computer system 400, such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 400 may implement the web browser 408 stored program components. The web browser 408 may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the computer system 400 may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system 400 may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Advantages of the embodiment of the present disclosure are illustrated in the following paragraphs.

In some embodiments, the present disclosure provides a method and a system for resolving one or more anomaly events occurring in a virtual environment in real-time.

The present disclosure dynamically captures and interprets real-time anomaly events that affect user experience in the virtual environment and performs self-healing/auto-implementation of one or more actions to resolve the anomaly events dynamically.

The present disclosure provides a feature wherein repetitive anomalies commonly occurring in the virtual environment for most of the users are automatically identified based on continuous monitoring and addressed automatically without the need for the users to raise service tickets.

The present disclosure provides a feature wherein the users may be provided with necessary notifications in a way customized by the user, when the actions require interference of the users for resolving the anomaly events.

The present disclosure provides a feature wherein new resolution policies may be generated based on self-learning by the virtual assisting system when new anomaly events arc identified for the first time and subsequently implemented in real-time. The present disclosure also provides a feature wherein the new resolution policies thus generated are distributed to one or more remote servers associated with the virtual assisting system to maintain an updated local copy of the resolution policies.

A description of an embodiment with several components in communication with each other does not imply that all such components are required. On the contrary a variety of optional components are described to illustrate the wide variety of possible embodiments of the invention.

When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system resolving one or more anomaly events occurring in a virtual environment in real-time. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open-ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

**Claims**

1. A method of resolving one or more anomaly events occurring in a virtual environment in real-time, the method comprising:

identifying, by a virtual assisting system (107), one or more trigger points in relation to the one or more anomaly events affecting user experience in the virtual environment the identifying comprising:

monitoring, by the virtual assisting system (107), the one or more predefined trigger parameters causing the one or more anomaly events in the virtual environment;
comparing, by the virtual assisting system (107), values associated with each of the one or more predefined trigger parameters with predefined trigger threshold values; and
identifying, by the virtual assisting system (107), the one or more trigger points when a deviation is detected in the values associated with each of the one or more predefined trigger parameters based on the comparison;

retrieving, by the virtual assisting system (107), each of one or more resolution policies corresponding to each of the one or more trigger points from a policy database (108) associated with the virtual assisting system (107), each of the one or more resolution policies indicating a solution to resolve the one or more anomaly events and one or more of: predefined trigger threshold values, predefined trigger parameters associated with each of the one or more trigger points, metrics and weights associated with each of the one or more predefined trigger parameters, user experience threshold value, and one or more actions corresponding to the user experience threshold value;
computing, by the virtual assisting system (107), a user experience index value for each of the one or more trigger points based on each of one or more metrics and each of one or more weights associated with each of the one or more trigger points recorded in each of the one or more resolution policies; and
implementing, by the virtual assisting system (107), in real-time, one or more actions corresponding to each of the one or more trigger points, indicated in each of the one or more resolution policies based on the user experience index value to resolve the one or more anomaly events occurring in the virtual environment, wherein the one or more actions to be implemented are identified by comparing the user experience index value with the user experience threshold value provided in each of the one or more resolution policies, and
wherein the one or more actions are at least one of a self-implementing type or a user intervention type, wherein in the self-implementing type the one or more anomaly events are resolved without intervention of a user (105) and in the user intervention type the one or more anomaly events are resolved upon intervention of the user (105) by sending a notification to the user (105).

2. The method as claimed in claim 1, wherein the user experience index value of each of the one or more trigger points indicates respective impact of each of the one or more trigger points identified in the virtual environment.

3. The method as claimed in any of the preceding claims, further comprising:

generating, by the virtual assisting system (107), one or more new resolution policies in real-time when the one or more trigger points are related to new anomaly events in the virtual environment;
adding, by the virtual assisting system (107), the new anomaly events and the corresponding one or more new resolution policies to the policy database (108); and
distributing, by the virtual assisting system (107), the one or more new resolution policies to each of one or more remote servers (101) associated with the virtual assisting system (107).

4. The method as claimed in any of the preceding claims, further comprising updating, by the virtual assisting system (107), the one or more resolution policies based on self-learning in the virtual environment.

5. The method as claimed in claim 1, wherein the notification is at least one of an audio notification or a visual notification.

6. The method as claimed in any of the preceding claims, wherein the virtual environment comprises one or more local computing devices (103) of users (105) communicating with one or more remote servers (101) associated with the virtual assisting system (107).

7. A virtual assisting system (107) for resolving one or more anomaly events occurring in a virtual environment in real-time, the virtual assisting system (107) comprising:

a processor; and
a memory communicatively coupled to the processor, wherein the memory stores the processor-executable instructions, which, on execution, cause the processor to perform the method of any of the preceding claims.

8. A computer readable medium including instructions stored thereon that, when processed by at least one processor (109) causes a virtual assisting system (107) to perform the method of any of claims 1 to 6.

9. A computer program product comprising instructions that, when executed by a computer, cause the computer to perform a method in accordance with any of claims 1 to 6.

**Patentansprüche**

1. Verfahren zum Auflösen eines oder mehrerer Anomalieereignisse, die in einer virtuellen Umgebung in Echtzeit auftreten, das Verfahren umfassend:

Identifizieren, durch ein virtuelles Assistenzsystem (107), von einem oder mehreren Auslöserpunkten in Bezug auf das eine oder die mehreren Anomalieereignisse, die die Benutzererfahrung in der virtuellen Umgebung beeinflussen, das Identifizieren umfassend:

Überwachen, durch das virtuelle Assistenzsystem (107), des einen oder der mehreren vordefinierten Auslöserparameter, die das eine oder die mehreren Anomalieereignisse in der virtuellen Umgebung verursachen;
Vergleichen, durch das virtuelle Assistenzsystem (107), von Werten, die mit jedem von dem einen oder den mehreren vordefinierten Auslöserparametern assoziiert sind, mit vordefinierten Auslöserschwellenwerten; und
Identifizieren, durch das virtuelle Assistenzsystem (107), des einen oder der mehreren Auslöserpunkte, wenn in den Werten, die mit jedem von dem einen oder den mehreren vordefinierten Auslöserparametern

EP 3 489 828 B1

assoziiert sind, basierend auf dem Vergleich eine Abweichung erkannt wird;

Abrufen, durch das virtuelle Assistenzsystem (107), jeder von einer oder mehreren Auflösungsrichtlinien, die jedem von dem einen oder den mehreren Auslöserpunkten entsprechen, aus einer Richtliniendatenbank (108), die mit dem virtuellen Assistenzsystem (107) assoziiert ist, wobei jede von der einen oder den mehreren Auflösungsrichtlinien eine Lösung angibt, um das eine oder die mehreren Anomalieereignisse aufzulösen, und eines oder mehrere von: vordefinierten Auslöserschwellenwerten, vordefinierten Auslöserparametern, die mit jedem von dem einen oder den mehreren Auslöserpunkten assoziiert sind, Metriken und Gewichtungen, die mit jedem von dem einen oder den mehreren vordefinierten Auslöserparametern assoziiert sind, einem Benutzererfahrung-Schwellenwert, und einer oder mehreren Aktionen, die dem Benutzererfahrung-Schwellenwert entsprechen;

Berechnen, durch das virtuelle Assistenzsystem (107), eines Benutzererfahrung-Indexwerts für jeden von dem einen oder den mehreren Auslöserpunkten, basierend auf jeder von der einen oder den mehreren Metriken und jeder von der einen oder den mehreren Gewichtungen, die mit jedem von dem einen oder den mehreren Auslöserpunkten assoziiert sind, die in jeder von der einen oder den mehreren Auflösungsrichtlinien aufgezeichnet sind; und

Implementieren, durch das virtuelle Assistenzsystem (107), in Echtzeit, einer oder mehrerer Aktionen, die jedem von dem einen oder den mehreren Auslöserpunkten entsprechen, die in jeder von dem einen oder den mehreren Auflösungsrichtlinien basierend auf dem Benutzererfahrung-Indexwert angegeben sind, um das eine oder die mehreren Anomalieereignisse aufzulösen, die in der virtuellen Umgebung auftreten, wobei die eine oder die mehreren zu implementierenden Aktionen durch Vergleichen des Benutzererfahrung-Indexwerts mit dem Benutzererfahrung-Schwellenwert, der in jeder von der einen oder den mehreren Auflösungsrichtlinien bereitgestellt ist, identifiziert werden, und

wobei die eine oder die mehreren Aktionen mindestens eines vom Typ Selbstimplementierung oder vom Typ Benutzereingriff sind, wobei beim Typ Selbstimplementierung das eine oder die mehreren Anomalieereignisse ohne Eingriff eines Benutzers (105) aufgelöst werden und beim Typ Benutzereingriff das eine oder die mehreren Anomalieereignisse nach Eingriff des Benutzers (105) durch Senden einer Benachrichtigung an den Benutzer (105) aufgelöst werden.

2. Verfahren nach Anspruch 1, wobei der Benutzererfahrung-Indexwert jedes von dem einen oder den mehreren Auslöserpunkten die jeweilige Auswirkung jedes vom dem einen oder den mehreren Auslöserpunkten angibt, die in der virtuellen Umgebung identifiziert sind.

3. Verfahren nach einem der vorherigen Ansprüche, ferner umfassend:

Erzeugen, durch das virtuelle Assistenzsystem (107), einer oder mehrerer neuer Auflösungsrichtlinien in Echtzeit, wenn sich der eine oder die mehreren Auslöserpunkte auf neue Anomalieereignisse in der virtuellen Umgebung beziehen;

Hinzufügen, durch das virtuelle Assistenzsystem (107), der neuen Anomalieereignisse und der entsprechenden einen oder den mehreren neuen Auflösungsrichtlinien zu der Richtliniendatenbank (108); und

Verteilen, durch das virtuelle Assistenzsystem (107), der einen oder der mehreren neuen Auflösungsrichtlinien an jeden von einem oder mehreren entfernten Servern (101), die mit dem virtuellen Assistenzsystem (107) assoziiert sind.

4. Verfahren nach einem der vorherigen Ansprüche, ferner umfassend ein Aktualisieren der einen oder der mehreren Auflösungsrichtlinien durch das virtuelle Assistenzsystem (107) basierend auf Selbstlernen in der virtuellen Umgebung.

5. Verfahren nach Anspruch 1, wobei die Benachrichtigung mindestens eine von einer Audio-Benachrichtigung oder einer visuellen Benachrichtigung ist.

6. Verfahren nach einem der vorherigen Ansprüche, wobei die virtuelle Umgebung ein oder mehrere lokale Rechenvorrichtungen (103) von Benutzern (105) umfasst, die mit einem oder mehreren entfernten Servern (101) kommunizieren, die mit dem virtuellen Assistenzsystem (107) assoziiert sind.

7. Virtuelles Assistenzsystem (107) zum Auflösen von einem oder mehreren Anomalieereignissen, die in einer virtuellen Umgebung in Echtzeit auftreten, das virtuelle Assistenzsystem (107) umfassend:

einen Prozessor; und

einen Speicher, der kommunikativ mit dem Prozessor gekoppelt ist, wobei der Speicher die von dem Prozessor ausführbaren Anweisungen speichert, die, bei Ausführung, den Prozessor veranlassen, das Verfahren nach einem der vorherigen Ansprüche auszuführen.

**8.** Computerlesbares Medium, das darauf gespeicherte Anweisungen beinhaltet, die, wenn sie von mindestens einem Prozessor (109) verarbeitet werden, ein virtuelles Assistenzsystem (107) veranlassen, das Verfahren nach einem der Ansprüche 1 bis 6 auszuführen.

**9.** Computerprogrammprodukt, umfassend Anweisungen, die bei Ausführung durch einen Computer den Computer veranlassen, ein Verfahren nach einem der Ansprüche 1 bis 6 auszuführen.

**Revendications**

**1.** Procédé de résolution d'un ou plusieurs événements d'anomalie survenant dans un environnement virtuel en temps réel, le procédé comprenant :

l'identification, par un système d'assistance virtuel (107), d'un ou plusieurs points de déclenchement en relation avec le ou les événements d'anomalie affectant l'expérience utilisateur dans l'environnement virtuel, l'identification comprenant :

la surveillance, par le système d'assistance virtuel (107), du ou des paramètres de déclenchement prédéfinis entraînant le ou les événements d'anomalie dans l'environnement virtuel ;
la comparaison, par le système d'assistance virtuel (107), des valeurs associées à chacun des un ou plusieurs paramètres de déclenchement prédéfinis avec des valeurs seuils de déclenchement prédéfinies ; et
l'identification, par le système d'assistance virtuel (107), du ou des points de déclenchement lorsqu'un écart est détecté dans les valeurs associées à chacun du ou des paramètres de déclenchement prédéfinis sur la base de la comparaison ;

la récupération, par le système d'assistance virtuel (107), de chacune d'une ou plusieurs politiques de résolution correspondant à chacun du ou des points de déclenchement à partir d'une base de données de politiques (108) associée au système d'assistance virtuelle (107), chacune de la ou des politiques de résolution indiquant une solution pour résoudre le ou les événements d'anomalie et un ou plusieurs parmi : des valeurs seuils de déclenchement prédéfinies, des paramètres de déclenchement prédéfinis associés à chacun du ou des points de déclenchement, des métriques et poids associés à chacun du ou des paramètres de déclenchement prédéfinis, une valeur seuil d'expérience utilisateur et une ou plusieurs actions correspondant à la valeur seuil d'expérience utilisateur ;
le calcul, par le système d'assistance virtuel (107), d'une valeur d'indice d'expérience utilisateur pour chacun du ou des points de déclenchement sur la base de chacune d'une ou plusieurs métriques et de chacun d'un ou plusieurs poids associés à chacun du ou des points de déclenchement enregistrés dans chacune de la ou des politiques de résolution ; et
la mise en œuvre, par le système d'assistance virtuel (107), en temps réel, d'une ou plusieurs actions correspondant à chacun du ou des points de déclenchement, indiquées dans chacune de la ou des politiques de résolution sur la base de la valeur d'index d'expérience utilisateur pour résoudre le ou les événements d'anomalie survenant dans l'environnement virtuel, ladite ou lesdites actions à mettre en œuvre étant identifiées en comparant la valeur d'index d'expérience utilisateur avec la valeur seuil d'expérience utilisateur fournie dans chacune de la ou des politiques de résolution, et
ladite ou lesdites actions étant au moins de l'un d'un type de mise en œuvre automatique ou d'un type d'intervention d'utilisateur, dans le type de mise en œuvre automatique, ledit ou lesdits événements d'anomalie étant résolus sans intervention d'un utilisateur (105) et dans le type d'intervention d'utilisateur ledit ou lesdits événements d'anomalie étant résolus sur intervention de l'utilisateur (105) en envoyant une notification à l'utilisateur (105).

**2.** Procédé selon la revendication 1, ladite valeur d'indice d'expérience utilisateur de chacun du ou des points de déclenchement indiquant l'impact respectif de chacun du ou des points de déclenchement identifiés dans l'environnement virtuel.

3. Procédé selon l'une quelconque des revendications précédentes, comprenant en outre :

la génération, par le système d'assistance virtuel (107), d'une ou plusieurs nouvelles politiques de résolution en temps réel lorsque le ou les points de déclenchement sont liés à de nouveaux événements d'anomalie dans l'environnement virtuel ;
l'ajout, par le système d'assistance virtuel (107), des nouveaux événements d'anomalie et de la ou des nouvelles politiques de résolution correspondantes à la base de données de politiques (108) ; et
la distribution, par le système d'assistance virtuel (107), de la ou des nouvelles politiques de résolution à chacun d'un ou plusieurs serveurs distants (101) associés au système d'assistance virtuel (107).

4. Procédé selon l'une quelconque des revendications précédentes, comprenant en outre la mise à jour, par le système d'assistance virtuel (107), de la ou des politiques de résolution sur la base de l'auto-apprentissage dans l'environnement virtuel.

5. Procédé selon la revendication 1, ladite notification étant au moins l'une parmi une notification audio ou une notification visuelle.

6. Procédé selon l'une quelconque des revendications précédentes, ledit environnement virtuel comprenant un ou plusieurs dispositifs informatiques locaux (103) d'utilisateurs (105) communiquant avec un ou plusieurs serveurs distants (101) associés au système d'assistance virtuel (107).

7. Système d'assistance virtuel (107) destiné à résoudre un ou plusieurs événements d'anomalie survenant dans un environnement virtuel en temps réel, le système d'assistance virtuel (107) comprenant :

un processeur ; et
une mémoire couplée de manière communicante au processeur, ladite mémoire stockant les instructions exécutables par processeur, qui, lors de l'exécution, amènent le processeur à réaliser le procédé selon l'une quelconque des revendications précédentes.

8. Support lisible par ordinateur comprenant des instructions stockées sur celui-ci qui, lorsqu'elles sont traitées par au moins un processeur (109), amènent un système d'assistance virtuel (107) à réaliser le procédé selon l'une quelconque des revendications 1 à 6.

9. Produit programme informatique comprenant des instructions qui, lorsqu'elles sont exécutées par un ordinateur, amènent l'ordinateur à réaliser le procédé selon l'une quelconque des revendications 1 à 6.

FIG.1

Virtual assisting system **107**

Processor **109**

I/O interface **111**

Memory **113**

Data **203**

Trigger point data **207**

Resolution policy data **209**

User experience index data **213**

Other data **225**

Modules **205**

Trigger point identifying module **231**

Policy retrieving module **233**

Computing module **235**

Notification module **236**

Action implementing module **237**

Resolution policy generation module **239**

Other modules **243**

FIG.2

300

Identify one or more trigger points in relation to one or more anomaly events — 301

Retrieve one or more resolution policies associated with each of the one or more trigger points — 303

Compute a User Experience Index (UXI) value for each of the one or more trigger points — 305

Implement one or more actions based on the UXI value to resolve the one or more anomaly events — 307

FIG.3

FIG.4

**EP 3 489 828 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016191639 A
- US 2014068348 A

- WO 2013097176 A